# EUROPEAN PATENT SPECIFICATION

(11) **EP 3 563 298 B1**
(45) Date of publication and mention of the grant of the patent: **02.11.2022**
(21) Application number: 17837889.9
(22) Date of filing: 28.12.2017
(51) Int. Cl.: G06K 19/07, H01Q 1/22, H01Q 5/35, H01Q 5/307, H01Q 7/00, H01Q 13/10, H04B 5/00, H01Q 9/42

(54) **DUAL UHF AND NFC BOTTLE TAG**
DUALES UHF- UND NFC-FLASCHENETIKETT
ÉTIQUETTE DE BOUTEILLE UHF ET NFC DOUBLE

(30) Priority: 28.12.2016 GB 201622326
(43) Date of publication of application: 06.11.2019
(73) Proprietor: Captag Solutions Ltd, East Grinstead, Sussex RH19 2PQ (GB)
(72) Inventor: MAPLESTON, David Bernard, St Andrews Ridge Swindon, Wiltshire SN25 4YE (GB); WEEKS, Brian, Walton on Thames Surrey KT12 3DQ (GB); POTTER, David Christopher, East Grinstead Sussex RH19 2PQ (GB)
(74) Representative: Ellis, Michael James
(86) International application number: PCT/EP2017/084787
(87) International publication number: WO 2018/122363

(56) References cited:
- US-A1- 2009 066 516
- US-A1- 2011 068 987
- US-A1- 2016 180 213

## Description

### FIELD OF THE INVENTION

This invention pertains generally to tags for fluid-carrying vessels, such as bottles, more particularly to UHF tags, forms of such tags and methods of implementing and especially to dual UHF and NFC tags.

### BACKGROUND OF THE INVENTION

A high percentage of wines and spirits moving through the supply chain are known to be fake.

Import duty can be avoided by re-filling used bottles with substandard spirits, or faking the bottles and the spirits for black market sales to avoid import taxes.

Counterfeit spirits or wines do not only cause significant losses of earnings for the true manufacturer and custom/excise authorities, they also put the public's health at risk. Some of the brewing and distilling methods used to create the fake wines and spirits have dangerous toxins which can pose serious health problems, like blindness and in some cases death.

Unfortunately, theft between the store room and the sales shelves is as much of a concern to some shops as theft by customers. Doorway monitoring; and better still, constant automated stock inventory systems can now be implemented using covert tagging to identify theft by monitoring the bottle movements and registering this with video footage.

Bottles can now be verified using low cost readers attached to iPhone or Android phones etc.

Overt tagging can also be implemented to discourage theft by printing 'radio tagged' or something similar, on the strap covering the bottle top. This can be demonstrated to customers and also used as a selling tool showing details of the wine or spirit they have selected on the closest monitor, mirror or dedicated screen.

Using RFID to tag bottles is one step forward. However, the costs involved have been too prohibitive until the advent the method described in UK patent GB2493996, the use of which is believed to add as little as 6 US cents to the cost of the spirit or fine wine.

Lower frequency tags at 13.56 MHz and 12 KHz and below do work to some extent on fluids; however, they are costly and could not be covertly integrated within the aesthetics of the bottle. Also they would only give one meter range or less as they utilise the magnetic part of the radio wave.

US-A1-20090066516 describes radio frequency identification (RFID) tags comprising two or more antennas that are operable in two different frequency bands.

US-A1-20160180213 describes an RFID device comprising a conductive sheet defining at least first and second portions. The first portion defines a multi-turn high frequency antenna having disruptions in the conductive sheet and the second portion defines a first radiating arm of an ultra-high frequency antenna.

US-A1-20110068987 describes an RFID tag for communicating with a wireless reader interrogator on more than one frequency band.

The present inventor has devised a device and system that addresses the aforementioned need while overcoming the problems with the prior art.

### PROBLEM TO BE SOLVED BY THE INVENTION

There is a need for improvements in tags for inventory such as fluid carrying vessels.

It is an object of the invention to provide a tag such as an RFID tag that has improved functionality.

### SUMMARY OF THE INVENTION

In accordance with a first aspect of the invention, there is provided a dual (or combined) tag device for use with vessels for carrying a fluid medium, the tag device comprising an ultra-high frequency (UHF) tag means operable at an ultra-high frequency and a near-field communication (NFC) tag means, which device comprises:
an UHF integrated circuit for the UHF tag means, which UHF tag means comprises a UHF resonant loop associated with the UHF integrated circuit;
an antenna for receiving or collecting radio energy, which is connected to the UHF integrated circuit;
an NFC integrated circuit for the NFC tag means operable at a radiofrequency lower than ultra-high frequency; and
an inductive coil for forming a tuned circuit with a capacitance in the NFC integrated circuit,
wherein the inductive coil further acts as a capacitive pad connected to the UHF integrated circuit and configured for capacitive coupling with a fluid medium carried or to be carried by the vessel, wherein the antenna is connected to the UHF resonant loop, which loop is connected to the inductive coil, wherein, in use, the inductive coil forming an NFC transponder tuned circuit provides a second function as the UHF capacitive coupling means via the vessel wall and into the fluid thereby creating a substantial current flow through the UHF chip resulting in enhanced UHF range without adversely affecting the operation of the NFC transponder.

In a second aspect of the invention, there is provided a vessel fitted with a dual tag device as defined above.

### ADVANTAGES OF THE INVENTION

The dual or combined tag device of the invention enable tags to be applied to bottles or other fluid carrying vessels to provide inventory control and anti-tamper function by way of a UHF tag function and device and authentication or other customer communication by way of the NFC tag function whereby the NFC tag further acts to enhance the UHF signal.

### BRIEF DESCRIPTION OF THE DRAWINGS

Figure 1 is an illustration of a dual UHF and NFC tag according to one embodiment of the invention where there is provided a separate UHF chip and NFC chip; and
Figure 2 is an illustration of a dual UHF and NFC tag according to another embodiment of the invention where there is provided a single combined UHF and NFC chip or integrated circuit.

### DETAILED DESCRIPTION OF THE INVENTION

The invention is concerned with a dual or combined tag device having a first ultra-high frequency (UHF) tag means operable at a first radiofrequency and a second near field communication (NFC) tag means operable at a second radiofrequency lower than the first radiofrequency. The dual tag means is for providing a first UHF tag function and a second NFC tag function.

Preferred features defined herein may apply to any of the aspects of the invention set out above as apparent from the context.

Preferably, the second radiofrequency is considerably different from the first radiofrequency to enable the first tag means and the second tag means to function without significant or problematic signal interference.

Preferably the first radiofrequency is in a range of at least 30 MHz, preferably at least 100 MHz and more preferably at least 300 MHz. The first radiofrequency is an ultra-high frequency or UHF, which is typically from 300 MHz to 3 GHz and ideally is from 800 MHz to 1 GHz, more preferably 856 to 960 MHz, such as 866 MHz, 915 MHz or 922.5 MHz in order comply with current global standards. Thus, the first radiofrequency tag means is a UHF tag means.

Preferably the second radiofrequency is significantly different from the first radiofrequency and preferably is up to 30 MHz, typically 10 to 20 MHz and ideally 13.56 MHz to comply with global standards for near field communication devices. Thus, the second tag means is a NFC tag means.

Hereinafter, for convenience, the disclosure will relate to UHF tag means and NFC tag means and it should be understood that reference to UHF tag means or UHF may be substituted, where the context allows, with first tag means or first radiofrequency (or options thereof) and NFC tag means or NFC frequency may be substituted, where the context allows, with second tag means or second radiofrequency (or options thereof). However, UHF and NFC are clearly preferred embodiments.

Preferably the dual tag and also preferably the UHF tag means and preferably the NFC tag means are passive devices.

The dual tag preferably comprises an RF integrated circuit (or chip) operable at the first radio frequency and thus preferably a UHF integrated circuit or chip, a connection to an antenna (or comprises an antenna) configured to collect radio energy and in particular UHF radio energy, especially from a UHF signal emitted from a UHF reader (or interrogator) and a capacitive coupling member or capacitive pad connected to the UHF integrated circuit and configured to form a capacitive coupling with an associated capacitive medium, e.g. a capacitive fluid, especially a liquid. The dual tag preferably further comprises an NFC integrated circuit (or chip) and an inductive coil which forms a tuned circuit with the capacitance in the NFC chip. The inductive coil preferably provides the capacitive coupling member or capacitive pad.

In the UHF tag means, the capacitive pad or capacitive coupling means serves to enhance the operation of the UHF tag means. In particular, the capacitive coupling means, which has been described in previous patent publications such as GB2535971 and GB2542574, facilitates the current flow from the antenna through the integrated circuit to provide power to the device by capacitive coupling with a capacitive medium, typically a fluid and more particularly a liquid to be carried by a vessel to which the dual tag is to be applied.

By virtue of the capacitive coupling means, which in the present invention is provided by an inductive coil of the NFC which is connected to the UHF tag means, current flow is drawn from the top of the tag's antenna through the UHF chip by connecting the bottom of the tag, by capacitive means, to a capacitive fluid. The fluid then dissipates the RF energy as heat (like a microwave oven) and also it re-radiates some of the energy from its surface. This dispersion and re-radiation creates current flow through the tag from top to bottom. The UHF tag means comprises a loop associated with the integrated circuit which is tuned to a resonant frequency of operation of the device, whereby current flow therethrough energises the tuned loop and powers the RFID chip. This is preferably an alternating current, usually at 866MHz, 915MHz or 922.5MHz to comply with today's worldwide standards.

Thus, the inductive coil preferably acts both as an inductive transducer for the NFC tag and a capacitive pad for the UHF tag.

The inductive coil as described herein is preferably a coil for an NFC transducer which enables communication with NFC enabled devices such as smartphones.

NFC tags communicate with a reader or smartphone over short distances, typically up to 5 cm and more typically about 4 cm typically. This type of tag utilises the magnetic part of the electromagnetic wave. It is called near field as magnetic RF power decreases as the cube root of distance where the electric field reduces as the square root of distance.

By incorporating both NFC (short range magnetic coupled) tags and UHF (long range 'E' field) tags, the long range tag can be used for inventory control and security etc. whilst the short range NFC tag can be used by the customers to verify the tags authenticity and gain some information directly from bottle/vessel to phone.

As indicated above, the dual tag of the present invention may be used in any application especially where there is an available capacitive medium to act, through capacitive coupling with the inductive coil, as a current sink or dissipative medium for the UHF tag means, whereby the UHF tag means range is significantly enhanced. Typically, this is in applications where a vessel is used to carry a fluid, typically a liquid.

Preferably, the vessel may be a bottle or jar and may be of any suitable material, but preferably glass or plastic.

Due to the high dielectric properties of glass the coupling to the fluid within is very efficient and when the bottle is made from plastic then the distance between the capacitive plate and the fluid is small which again aides coupling. In fact the performance of this invention on glass bottles or plastic bottles is almost equal due to these two factors.

The inductive coil of the NFC tag means provides a capacitive member or plate which forms a capacitive coupling via the vessel with fluid in the vessel, acting, effectively, as the other capacitive plate.

The lower frequency NFC coil thus greatly enhance the performance of the UHF tag; simply by using the coil as a capacitive plate which allows the high frequency UHF signal to be coupled into the fluid.

Typical fluids, or more particularly liquids, include wines, beers and spirits.

Tamper evidence and individual bottle identity are of interest to industry; also the near field tags, which can be read by standard smart phones, give marketing and sales people exciting new ways to engage the public.

NFC tags can also provide a secure means of authenticating that products are genuine.

A highly secure chip could be selected if the application required it or a low cost option chosen if cost a significant factor.

In one main embodiment, the dual tag device comprises two chips or integrated circuits, one forming part of the NFC tag along with the inductive coil one forming part of the UHF tag along with the antennae and the inductive coil acting as a capacitive pad.

According to this embodiment, the dual tag can provide a further security feature to facilitate authentication of products bearing the tag. By having two chips with two unique identifications adds to security as the paired IDs could be stored securely in the cloud. The tag would thereby be more difficult clone.

In a second main embodiment, and preferred embodiment, the dual tag comprises a single integrated circuit or chip functioning as the chip for the UHF tag and the NFC tag.

In a preferred embodiment of the present invention, the capacitive coupling member or area at the bottom of the tag is provided by an NFC tag coil. At UHF frequencies the normal function of this NFC tag is ignored due to the low resonant frequency of the coil (13.56MHz), so the metal spiral windings of the NFC coil do not tune or resonate and so the UHF tag sees the NFC coil as a simple capacitive plate and so behaves normally with the extended UHF range seen using this type of tag structure. So, in short, the UHF tag uses the NFC tags coil as its capacitive path to the fluid.

It can also be shown that the NFC tag is unaffected by the UHF signal and so it can be interrogated at close range using a smart phone with NFC capability as normal.

The performance of the NFC chip can be selected according to whether the application requires a highly secure, encrypted chip for authentication or whether lower cost chips could be used.

Preferably, an NFC coil is connected directly to one of the antennas of the combined UHF and NFC tag therefore carrying the UHF signal and forming part of the UHF antenna structure.

Optionally, the UHF tag may connected by an adequate conducting path to the NFC tag outside the silicon chip or inside the dual frequency integrated circuit.

Preferably, a conductive path between the NFC coil and UHF tuning loop can be switched on and off by the dual frequency integrated circuit.

Preferably, the NFC coil structure may be connected by capacitance means to any material capable of absorbing and/or conducting UHF signals.

Optionally, the tag structure utilises the bottle's metallic capsule to collect the required energy for the tag to operate, that is, the metallic capsule acts as an antenna extension for the UHF tag means.

Optionally, a tag structure utilises an antenna to collect the required energy from a reader in order to function.

Optionally, the dual tag comprises an active tag means or a partially active tag means wherein the integrated circuit power requirements are assisted by a further power sources such as a battery or a solar cell.

In one embodiment, the tag device comprises tamper evident means provided by a disconnect reducing current flow through the tag structure. Optionally, tamper evident means is provided by a redirection of current flow reducing current flow through the integrated circuit. Optionally, the device is configured such that a tamper attempt creates an open circuit in the NFC coil and or in the UHF tuning loop. Optionally, a dedicated loop is made open circuit by a tamper attempt or is made closed by a tamper attempt.

Preferably, the tag device of the invention is configured to be able to change its code when a tamper attempt on either the UHF or NFC loop is made by any means.

Preferably, the dual tag as defined herewith is compliant with ISO/IEC 14443.

Preferably, the dual tag is primarily but not exclusively for vessels, uses an antenna means to collect UHF radio energy which is then connected to a UHF loop containing the UHF transponder integrated circuit, this loop is then connected to a coil which normally provides the tuning for the NFC transponder wherein, in use the NFC transponder tuned circuit provided a second function as the UHF capacitive coupling means via the vessel wall and into the fluid where its dispersal creates a substantial current flow through the UHF transponder chip resulting in enhanced UHF range without adversely affecting the operation of the NFC transponder.

Preferably, the dual tag device has a single RFID chip containing both the UHF and NFC transponder circuit. Optonally, the dual frequency integrated circuit is split into two separate integrated circuits, one for the UHF transponder function and one for the NFC ISO/IEC 14443 transponder function.

Optionally, the UHF transponder is connected by an RF conducting path to the NFC transponder outside the dual frequency integrated circuit.

Optionally, the UHF transponder is connected by an RF conducting path to the NFC transponder inside the dual frequency integrated circuit.

Optionally, the conductive path between the NFC coil and UHF tuning loop can be switched on and off by the dual frequency integrated circuit.

The dual tag device of the present invention finds particular application for use with bottles or jars carrying a fluid or for carrying a fluid, e.g. a liquid such as wine, beer, spirits or other fluid or capacitive medium. A typical vessel has a rim defining an opening through which the vessel may be filled and emptied and configured to receive a closure such as a screw cap, lid or cork. Optionally, as in wine, beer or spirits bottles, the vessel has a neck defining a reduced diameter portion between the body of the vessel and the rim or opening. In a preferred embodiment, the dual tag device is affixed to a side of the vessel close to a neck, if present, with an antenna portion extending toward the rim and optionally over a closure fitted to an opening and down the other side of the vessel (or neck thereof) to provide a tamper proof fitting. Optionally a metal or metallic capsule may be fitted over the rim (and neck where present) and may contact with the antenna to form an extended antenna for receiving UHF signals for communicating and powering the UHF tag means. The antenna portion is connected with an integrated circuit portion comprising a resonant loop (resonant at defined UHF frequencies) and an integrated circuit or chip, defining a unique ID. The integrated circuit or resonant loop is connected with an NFC inductive coil (providing a link between the antenna and the inductive coil), which for the purpose of the UHF tag means acts as a capacitive coupling member or capacitive plate for capacitive coupling through the vessel with a fluid therein. Preferably, therefore, the NFC inductive loop is disposed on a portion of the side of the vessel below a fill level of the vessel, so that it is directly opposed with a fluid to capacitively couple with. It is preferred therefore, that the antenna portion of the dual tag device is affixed to a portion of the vessel which is not, typically, containing fluid (e.g. the upper portion of the vessel near the rim, above the fill level), whilst the NFC inductive coil is affixed to a portion of the vessel which contains fluid (i.e. below a fill level). The NFC tag means comprises the inductive coil, acting as an NFC transponder, and integrated circuit or chip, which as mentioned above may be a separate chip to the UHF chip or may be a single dual frequency chip. Thus, a vessel such as a bottle is provided with a UHF tag means having a detection range of up to 5 m, preferably up to 10 m, even up to 20 or 25 m and a NFC tag means with a range of up to 5 cm, say, which NFC tag structure enhances the performance of the UHF tag means.

The tag structure described herein is also applicable to other applications.

One such application would be to monitor fluid levels. If placed on a non-conductive pole in water or most other fluids; the tag would have a short range until the fluid reached the NFC coil, only then would the reader see the tag or a change in its RSSI level (received signal strength indicator).

Another application would be on plastic or wooden plant sticks where the RSSI level in the reader would continue to fall as the soil covering the NFC coil or capacitive plate was drying out.

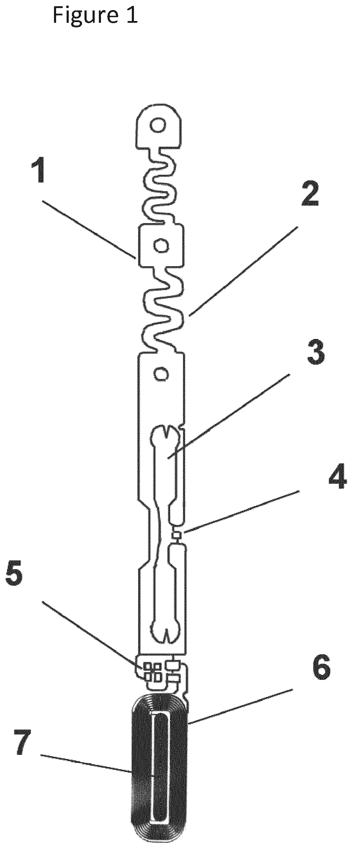

Another more comical example would be a conventional hat which would transmit well when the coil or plat in Figure 1 was in close proximity to the wearers head.

Long range wrist bands could be constructed using the base of the tag near the skin.

Automated Bath overflow systems can be created with the tag on the side of a plastic bath. The addition of an I2C temperature sensing device connected to the tag could also allow the tag to transmit temperature data.

New chips are being developed all the time with I/O outputs and the I2C two wire communication bus to a plethora of transducers; the principles in this patent can work alongside or with these transducers to form low cost effective monitoring systems.

The invention will now be described in more detail, without limitation, with reference to the accompanying Figures.

In Figure 1, a dual tag according to one embodiment of the invention is illustrated, which has two integrated circuits or chips - one for a UHF tag means and one for an NFC tag means. A dual tag according to the invention comprises an antenna 1 (Fig 1) configured to collect electromagnetic energy from a reader (e.g. a UHF RFID reader). This antenna 1 (Fig 1) may be disposed under or over a bottle capsule, typically a metal or metallic capsule, and couple to the capsule (e.g. by capacitive means) which capsule may effectively act as an extended antenna, and transfer the RF energy collected by the capsule to the tag. The antenna 1 comprises inductor 2 (Fig 1), which is one of two inductors used to extend the effective length of the antenna and provide some tuning, as is well known in the art of antenna design.

A tuned loop 3 (Fig 1) configured to resonate at the carrier frequency gives a tuned impedance match to the integrated circuit or chip 4 (Fig 1). The integrated circuit 4 (Fig 1) holds the identification number of the tag and responds back to the reader by modulating its impedance. This impedance loads and unloads the carrier and hence can be detected at the UHF reader or any other receiver tuned into this carrier frequency.

A separate NFC integrated circuit 5 (Fig 1) is provided which holds an identifying number and user information which can be transmitted back to a mobile phone or NFC reader over short distances (about 2cm). The coil inductor 6 (Fig 1) forms a tuned circuit with the capacitance in the NFC chip (typically 50pF). Added to this are stray capacitance and any deliberate external capacitance for fine tuning. The tuning frequency is usually 13.56MHz as this is a world standard for this type of NFC tag.

A connection pad 7 (Fig 1) connects to an underpass or to another identical coil on a separate layer so that the inductances are added together to form better NFC tuning, coupling and therefore range.

The area of the inductive coil 6 provides a capacitive area for the UHF tag.

In order to function, an RF signal is collected by antenna 1 (Fig 1) from an interrogating reader (not shown). A signal path through the UHF chip 4 (Fig 1) is provided. This is achieved by connecting the inductive loop 6 (Fig 1), acting as a capacitive pad, to the fluid by a capacitive means. Current flow is thereby drawn from the top of the tag, at the antenna 1 (Fig 1) and through the resonant loop 3 (Fig 1) to the inductive loop 6. The fluid dissipates the RF energy as heat (like a microwave oven) and also it re-radiates some of the energy from its surface. This dispersion and re-radiation creates current flow through the tag from top (antenna 1) to bottom (inductive loop 6) which energises the tuned loop 3 and powers the RFID chip 4. This is an alternating current usually at 866 MHz, 915 MHz or 922.5 MHz to comply with today's worldwide standards.

When the chip replies back to the reader, the reader ceases modulation and continues with the clean carrier to keep the chips circuits powered on the bottle. The reader senses the load change on this carrier when the chip opens and closes its antenna connections to create a serial data stream. This principle is known as backscatter as any other receiver tuned to the transmitting reader's frequency will also see the tags modulation on this carrier.

The dual tag according to this invention uses the near field NFC tag and in particular its conductive coil or loop 6 (Fig 1) to provide a second function, the capacitive plate to connect the base of the UHF tag to the fluid in the bottle. This then provides current flow through the tag which is required to energise the RFID chip.

The capacitive pad provided by inductive coil 6 (Fig 1) is used in place of a large area of metal that is used as a capacitive pad for coupling via capacitive means with fluid in a vessel to which the tag is applied as described in for example GB 2535971 or GB 2542574. Due to the high dielectric properties of glass the coupling to the fluid is very efficient and when the bottle is made from plastic then the distance between the capacitive plate and the fluid is small which again aides coupling; in fact the performance of this invention on glass bottles or plastic bottles is almost equal due to these two factors.

The capacitive coupling pad is provided by pad 7 and inductive coil 6 (Fig 1). At UHF frequencies the normal function of the NFC tag is ignored due to the low resonant frequency of the coil (13.56 MHz), so the metal spiral windings of the NFC coil do not tune or resonate and so the UHF tag sees the NFC coil as a simple capacitive plate and so behaves normally with the extended UHF range seen using this type of tag structure. So, in short, the UHF tag uses the NFC tags coil as its capacitive path to the fluid.

The NFC tag is also unaffected by the UHF signal and so it can be interrogated at close range using a smart phone with NFC capability as normal.

The performance of the NFC chip can be selected according to whether the application requires a highly secure, encrypted chip for authentication or whether lower cost chips could be used

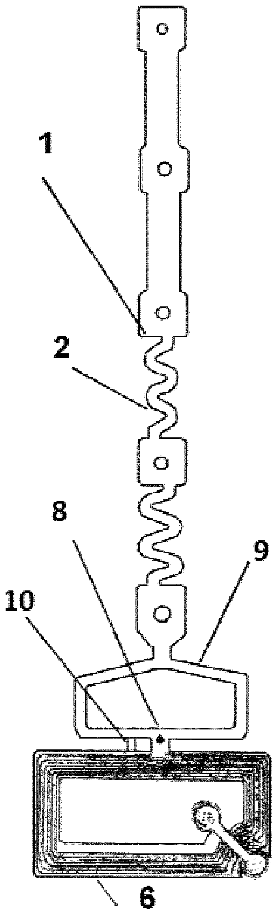

In Figure 2, a dual tag according to another embodiment of the invention is illustrated, which has a single dual functioning integrated circuits or chip - functioning as the chip for both a UHF tag means and a NFC tag means within the dual tag. A dual tag according to this embodiment of the invention uses a dual frequency RFID chip rather than two separate chips (one for UHF and one for NFC). Smart phone or close proximity NFC readers can read the NFC tag using magnetic coupling and long range UHF readers can interrogate the UHF part of the tag using Electric field coupling at ranges of about 10 meters.

The antenna 1 (Fig 2) collects the electromagnetic energy from the reader and may also be used over a bottle capsule as the capacitive plated antenna will couple to the capsule and transfer the energy collected by the capsule to the tag. The antenna comprises inductor 2, one of two inductors, used as in many antenna designs to extend the effective length of the antenna and provide some tuning. This is known to someone knowledgeable in the art of antenna design.

Integrated circuit 8 (Fig 2) holds the identification number of the tag and responds back to the reader by modulating its impedance. In this embodiment the integrated circuit chip performs a dual frequency function using UHF for its long range capability and the NFC circuit for short range and /or smart phone reading. The tag may utilise, for example, a Dual Frequency NFC Type 2 & EPC GEN2V2 Transponder IC, such as that available from EM Microelectronic-Marin SA under the EM Echo brand (and defined here: http://www.emmicroelectronic.com/sites/default/files/public/products/datasheets/4 423-fs_1.pdf). A tuned loop 9 (Fig 2) resonates at the carrier frequency and is designed to give a tuned impedance match to the integrated circuit 8.

An inductor coil or spiral conductor 6 (Fig 2) forms a tuned circuit with the capacitance in the NFC chip to which we can add the stray capacitance and any deliberate external capacitance for fine tuning. The tuning frequency is usually 13.56MHz as this is a world standard for this type of tag.

A simple short circuit 10 (Fig 2) is provided to connect the inductive coil 6 with the dual frequency integrated circuit or chip 8.

With chips that combine NFC with UHF functionality the two circuits inside the chip remain almost separate (measured at 750 K Ohms) so the capacitive area of the NFC coil can be used as capacitive coupling to the fluid. With these dual devices, a connection is required from the UHF chip to the NFC coil 6. This short-circuit 10 does not affect the NFC performance of the coil but greatly enhances the range of the UHF element of this embodiment.

The two parts of the dual tags work at such different frequencies 13.56MHz NFC, 866MHz UHF that the NFC tag has no tuning at the higher frequency; the NFC tag therefore acts the same as a capacitive area sending the UHF signal through the glass or plastic to into the fluid. This means that an NFC tag can be used within this UHF design without any increase in the tags physical size or extra material cost.

There are no issues arising from static protection diodes on the silicon chips would cause issues.

The invention has been described with reference to a preferred embodiment. However, it will be appreciated that variations and modifications can be effected by a person of ordinary skill in the art without departing from the scope of the invention.

## Claims

1. A dual or combined tag device for use with vessels for carrying a fluid medium, the tag device comprising an ultra-high frequency, UHF, tag means operable at an ultra-high frequency and a near-field communication, NFC, tag means, which device comprises:
a UHF integrated circuit (4) for the UHF tag means, which UHF tag means comprises a UHF resonant loop (3, 9) associated with the UHF integrated circuit (4);
an antenna (1) for receiving or collecting radio energy, which is connected to the UHF integrated circuit (4);
an NFC integrated circuit (5) for the NFC tag means operable at a radiofrequency lower than ultra-high frequency; and
an inductive coil (6) for forming a tuned circuit with a capacitance in the NFC integrated circuit (5),
**characterised in that** the inductive coil (6) further acts as a capacitive pad connected to the UHF integrated circuit (4) and configured for capacitive coupling with a fluid medium carried or to be carried by the vessel, wherein the antenna (1) is connected to the UHF resonant loop (3, 9), which loop (3, 9) is connected to the inductive coil (6), wherein, in use, the inductive coil (6) forming an NFC transponder tuned circuit provides a second function as the UHF capacitive coupling means via the vessel wall and into the fluid thereby creating a substantial current flow through the UHF chip (4) resulting in enhanced UHF range without adversely affecting the operation of the NFC transponder.

2. A tag as claimed in claim 1, wherein the tag has a single RFID chip comprising both the UHF integrated circuit (4) and the NFC integrated circuit (5).

3. A tag as claimed in claim 1 or claim 2, wherein there are two separate integrated circuits (4, 5), one for the UHF tag means and one for the NFC tag means.

4. A tag as claimed in claim 2, wherein the single RFID chip is a dual frequency integrated circuit (8).

5. A tag as claimed in claim 4, wherein the UHF tag means or transponder is connected by an RF conducting path to the NFC inductive coil (6) or transponder outside the dual frequency integrated circuit (8).

6. A tag as claimed in claim 4 or claim 5, wherein the conductive path between the NFC coil (6) and UHF tag means or transponder or tuning loop (9) can be switched on and off by the dual frequency integrated circuit (8).

7. A tag as claimed in any one of the preceding claims, which utilises a bottles metallic capsule to collect the required UHF energy in order to power the UHF integrated circuit (4).

8. A tag as claimed in any one of the preceding claims, which utilises any antenna means (1) to collect the required UHF radio energy in order to power the UHF integrated circuit (4).

9. A tag as claimed in any one of the preceding claims, which is a passive tag.

10. A tag as claimed in any one of the preceding claims, where tamper evident means is provided by a disconnect reducing current flow through the tag structure.

11. A tag as claimed in any one of the preceding claims where tamper evident means is provided by a redirection of current flow reducing current flow through the UHF transponder circuit.

12. A tag as claimed in any one of the preceding claims where a tamper attempt creates an open circuit in the NFC coil (6) or in the UHF tuning loop (3, 9).

13. A tag as claimed in any one of the preceding claims which has the capability of changing its code when a tamper attempt on the UHF tag is made by any means.

14. A vessel for containing a fluid, the vessel fitted with a dual tag as defined in any one of claims 1 to 13.

15. A vessel as claimed in claim 14 wherein the vessel contains a fluid to a fill level and is sealed with a closure.

## Patentansprüche

1. Duale oder kombinierte Etikettvorrichtung zur Verwendung mit Gefäßen zum Transportieren eines Fluidmediums, wobei die Etikettvorrichtung ein Ultrahochfrequenz, UHF, Etikettmittel, das bei einer Ultrahochfrequenz betrieben werden kann, und ein Nahfeldkommunikations-, NFC, Etikettmittel umfasst, wobei die Vorrichtung Folgendes umfasst:
einen integrierten UHF-Schaltkreis (4) für das UHF-Etikettmittel, wobei das UHF-Etikettmittel eine resonante UHF-Schleife (3, 9) umfasst, die mit dem integrierten UHF-Schaltkreis (4) verknüpft ist;
eine Antenne (1) zum Empfangen oder Sammeln von Funkenergie, die mit dem integrierten UHF-Schaltkreis (4) verbunden ist;
einen integrierten NFC-Schaltkreis (5) für das NFC-Etikettmittel, der bei einer niedrigeren Funkfrequenz als Ultrahochfrequenz betrieben werden kann; und
eine induktive Spule (6) zum Bilden eines abgestimmten Schaltkreises mit einer Kapazität in dem integrierten NFC-Schaltkreis (5),
**dadurch gekennzeichnet, dass** die induktive Spule (6) weiter als ein kapazitives Feld fungiert, das mit dem integrierten UHF-Schaltkreis (4) verbunden ist und konfiguriert ist, kapazitiv mit einem Fluidmedium gekoppelt zu sein, das von dem Gefäß transportiert wird oder transportiert werden soll,
wobei die Antenne (1) mit der resonanten UHF-Schleife (3, 9) verbunden ist, wobei die Schleife (3, 9) mit der induktiven Spule (6) verbunden ist, wobei, in Verwendung, die induktive Spule (6), die einen abgestimmten NFC-Transponder-Schaltkreis bildet, eine zweite Funktion als das kapazitive UHF-Kopplungsmittel über die Gefäßwand und in das Fluid bereitstellt, wodurch ein wesentlicher Stromfluss durch den UHF-Chip (4) erzeugt wird, der in einer verbesserten UHF-Reichweite resultiert, ohne den Betrieb des NFC-Transponders nachteilig zu beeinträchtigen.

2. Etikett nach Anspruch 1, wobei das Etikett einen einzelnen RFID-Chip aufweist, der sowohl den integrierten UHF-Schaltkreis (4) als auch den integrierten NFC-Schaltkreis (5) umfasst.

3. Etikett nach Anspruch 1 oder Anspruch 2, wobei es zwei separate integrierte Schaltkreise (4, 5) gibt, einen für das UHF-Etikettmittel und einen für das NFC-Etikettmittel.

4. Etikett nach Anspruch 2, wobei der einzelne RFID-Chip ein integrierter Schaltkreis (8) mit dualer Frequenz ist.

5. Etikett nach Anspruch 4, wobei das UHF-Etikettmittel oder der Transponder durch einen RF-Leitpfad mit der induktiven NFC-Spule (6) oder dem Transponder außerhalb des integrierten Schaltkreises (8) mit dualer Frequenz verbunden ist.

6. Etikett nach Anspruch 4 oder Anspruch 5, wobei der leitfähige Pfad zwischen der NFC-Spule (6) und dem UHF-Etikettmittel oder Transponder oder der Abstimmungsschleife (9) durch den integrierten Schaltkreis (8) mit dualer Frequenz eingeschaltet und ausgeschaltet werden kann.

7. Etikett nach einem der vorstehenden Ansprüche, das eine metallische Hülse einer Flasche nutzt, um die UHF-Energie zu sammeln, die benötigt wird, um den integrierten UHF-Schaltkreis (4) mit Leistung zu versorgen.

8. Etikett nach einem der vorstehenden Ansprüche, das irgendein Antennenmittel (1) nutzt, um die UHF-Energie zu sammeln, die benötigt wird, um den integrierten UHF-Schaltkreis (4) mit Leistung zu versorgen.

9. Etikett nach einem der vorstehenden Ansprüche, das ein passives Etikett ist.

10. Etikett nach einem der vorstehenden Ansprüche, wo ein Mittel zum Nachweis von Manipulation durch eine Trennung, die Stromfluss durch die Etikettstruktur verringert, bereitgestellt ist.

11. Etikett nach einem der vorstehenden Ansprüche, wo ein Mittel zum Nachweis von Manipulation durch eine Umleitung von Stromfluss, die Stromfluss durch den UHR-Transponder-Schaltkreis verringert, bereitgestellt ist.

12. Etikett nach einem der vorstehenden Ansprüche, wo ein Manipulationsversuch einen offenen Schaltkreis in der NFC-Spule (6) oder in der UHF-Abstimmungsschleife (3, 9) erzeugt.

13. Etikett nach einem der vorstehenden Ansprüche, das die Fähigkeit aufweist, seinen Code zu ändern, wenn ein Manipulationsversuch an dem UHF-Etikett auf irgendeine Weise angestellt wird.

14. Gefäß zum Halten eines Fluids, wobei das Gefäß mit einem dualen Etikett nach einem der Ansprüche 1 bis 13 ausgestattet ist.

15. Gefäß nach Anspruch 14, wobei das Gefäß ein Fluid zu einem Füllstand enthält und mit einem Verschluss abgedichtet ist.

## Revendications

1. Dispositif d'étiquette double ou combinée pour une utilisation avec des récipients pour transporter un milieu liquide, le dispositif d'étiquette comprenant un moyen étiquette ultra-haute fréquence, UHF, utilisable à une ultra-haute fréquence et un moyen étiquette de communication en champ proche, NFC, lequel dispositif comprend :
un circuit intégré UHF (4) pour le moyen étiquette UHF, lequel moyen étiquette UHF comprend une boucle résonante UHF (3, 9) associée au circuit intégré UHF (4) ;
une antenne (1) pour recevoir ou collecter une énergie radio, qui est connectée au circuit intégré UHF (4) ;
un circuit intégré NFC (5) pour le moyen étiquette NFC utilisable à une radiofréquence inférieure à l'ultra-haute fréquence ; et
une bobine d'induction (6) pour former un circuit accordé avec une capacité dans le circuit intégré NFC (5),
**caractérisé en ce que** la bobine d'induction (6) sert en outre de pastille capacitive connectée au circuit intégré UHF (4) et configuré pour un couplage capacitif avec un milieu liquide transporté ou devant être transporté par le récipient,
dans lequel l'antenne (1) est connectée à la boucle résonante UHF (3, 9), laquelle boucle (3, 9) est connectée à la bobine d'induction (6), dans lequel, en utilisation, la bobine d'induction (6) formant un circuit accordé à transpondeur NFC fournit une seconde fonction en tant que moyen de couplage capacitif UHF via la paroi de récipient et dans le liquide, créant ainsi un écoulement de courant important à travers la puce UHF (4) aboutissant à une plage UHF améliorée sans influence négative sur le fonctionnement du transpondeur NFC.

2. Étiquette selon la revendication 1, dans laquelle l'étiquette présente une puce RFID unique comprenant à la fois le circuit intégré UHF (4) et le circuit intégré NFC (5).

3. Étiquette selon la revendication 1 ou la revendication 2, dans laquelle il y a deux circuits intégrés séparés (4, 5), un pour le moyen étiquette UHF et un pour le moyen étiquette NFC.

4. Étiquette selon la revendication 2, dans laquelle la puce RFID unique est un circuit intégré à double fréquence (8).

5. Étiquette selon la revendication 4, dans laquelle le moyen étiquette UHF ou le transpondeur est connecté par un chemin de conduction RF à la bobine d'induction NFC (6) ou au transpondeur hors du circuit intégré à double fréquence (8).

6. Étiquette selon la revendication 4 ou la revendication 5, dans laquelle le chemin de conduction entre la bobine NFC (6) et le moyen étiquette UHF ou le transpondeur ou la boucle d'accord (9) peut être activé et désactivé par le circuit intégré à double fréquence (8).

7. Étiquette selon l'une quelconque des revendications précédentes, qui utilise une capsule métallique de bouteilles pour collecter l'énergie UHF nécessaire afin d'alimenter le circuit intégré UHF (4).

8. Étiquette selon l'une quelconque des revendications précédentes, qui utilise n'importe quel moyen antenne (1) pour collecter l'énergie radio UHF nécessaire afin d'alimenter le circuit intégré UHF (4).

9. Étiquette selon l'une quelconque des revendications précédentes, qui est une étiquette passive.

10. Étiquette selon l'une quelconque des revendications précédentes, où un moyen d'inviolabilité est fourni par une déconnexion réduisant un écoulement de courant à travers la structure d'étiquette.

11. Étiquette selon l'une quelconque des revendications précédentes où un moyen d'inviolabilité est fourni par une redirection d'un écoulement de courant réduisant un écoulement de courant à travers le circuit à transpondeur UHF.

12. Étiquette selon l'une quelconque des revendications précédentes où une tentative de manipulation crée un circuit ouvert dans la bobine NFC (6) ou dans la boucle d'accord UHF (3, 9).

13. Étiquette selon l'une quelconque des revendications précédentes qui présente la capacité à changer son code lorsqu'une tentative de manipulation sur l'étiquette UHF est faite par n'importe quel moyen.

14. Récipient pour contenir un liquide, le récipient étant doté d'une étiquette double telle que définie dans l'une quelconque des revendications 1 à 13.

15. Récipient selon la revendication 14 dans lequel le récipient contient un liquide à un niveau de remplissage et est scellé avec une fermeture.
